# EUROPÄISCHE PATENTSCHRIFT

(11) **EP 1 203 206 B1**
(45) Veröffentlichungstag und Bekanntmachung des Hinweises auf die Patenterteilung: **24.09.2003**
(21) Anmeldenummer: 00960300.2
(22) Anmeldetag: 21.07.2000
(51) Int. Cl.: G01H 3/12

(54) **VERFAHREN UND VORRICHTUNG ZUM AUFNEHMEN EINES BILDES EINER OBJEKTFLÄCHE MITTELS EINER FOKUSSIERBAREN STRAHLUNG**
METHOD AND DEVICE FOR RECORDING AN IMAGE OF AN OBJECT SURFACE USING FOCUSSED RADIATION
PROCEDE ET DISPOSITIF D'ENREGISTREMENT D'UNE IMAGE DE LA SURFACE D'UN OBJET PAR RAYONNEMENT FOCALISABLE

(30) Priorität: 30.07.1999 DE 19935909
(43) Veröffentlichungstag der Anmeldung: 08.05.2002
(73) Patentinhaber: SIEMENS AKTIENGESELLSCHAFT, 80333 München (DE)
(72) Erfinder: VESTER, Markus, D-91056 Erlangen (DE); OPPELT, Ralph, D-91080 Uttenreuth (DE)
(86) Internationale Anmeldenummer: DE0002401
(87) Internationale Veröffentlichungsnummer: WO01009577

(56) Entgegenhaltungen:
- US-A- 3 685 051
- US-A- 3 909 827
- US-A- 4 608 868
- US-A- 5 797 845
- US-A- 5 901 708
- BERNARD M: "Crossed-transducers array for transmission ultrasonic imaging" 1983 ULTRASONICS SYMPOSIUM PROCEEDINGS, ATLANTA, GA, USA, 31 OCT.-2 NOV. 1983, Seiten 732-735 vol.2, XP000972661 1983, New York, NY, USA, IEEE, USA in der Anmeldung erwähnt

## Beschreibung

Die Erfindung betrifft ein Verfahren und eine Vorrichtung zum Aufnehmen eines Bildes einer Objektfläche mittels einer fokussierbaren Strahlung.

Die Erfindung bezieht sich insbesondere auf ein solches Verfahren und auf eine solche Vorrichtung, bei dem oder bei der die fokussierbare Strahlung Ultraschall ist.

Im Rahmen der Erfindung soll mit einfachen Mitteln ein Bild einer zweidimensionalen Fläche erzeugt werden.

Aus der Dissertation "Theoretische und experimentelle Untersuchungen zur quasioptischen Abbildung mit einer Ultraschall-Transmissionskamera" von Ralph Oppelt, Friedrich-Alexander-Universität Erlangen-Nürnberg, Deutschland, 1985, S. 21-32, ist eine Vorrichtung zum Aufnehmen eines Bildes einer Objektfläche mittels Ultraschall bekannt, welche einen unfokussierten Ultraschall-Wandler als Sender für die Strahlung und eine zweidimensionale Anordnung mit vielen Ultraschall-Wandlern als Empfänger aufweist. Auch geht aus der Dissertation ein entsprechendes Verfahren zum Aufnehmen eines Bildes unter Benutzung dieser Vorrichtung hervor. Wesentlicher Nachteil der Vorrichtung ist die hohe Komplexität des Empfängers; da jeder Wandler ein Rasterelement des aufzunehmenden Bildes bildet, muss die Anzahl der Wandler für ein hinreichend scharfes Bild extrem hoch sein, insbesondere viele tausend betragen. Entsprechend aufwendig muss auch die Einrichtung zur Auswertung der Signale sämtlicher Wandler beschaffen sein.

Aus dem Aufsatz "Crossed-Transducers Array for Transmission Ultrasonic Imaging" von M. Bernard, IEEE 1983 Ultrasonics Symp., S. 732, geht eine Vorrichtung hervor, welche sowohl für den Sender als auch für den Empfänger jeweils eine lineare Anordnung vieler stabförmiger Wandler vorsieht. Die Anordnung des Empfängers ist dabei orthogonal zur Anordnung des Senders ausgerichtet. Jeder Wandler des Senders erzeugt ein streifenförmig ausgedehntes Signal, und jeder Wandler des Empfängers ist empfindlich für streifenförmige Signale. Ein Raster für das aufzunehmende Bild ist definiert durch die Kreuzungspunkle der streifenförmigen Signale jeweils eines Wandlers im Sender und jeweils eines Wandlers im Empfänger. Wesentliches Merkmal dieser Vorrichtung ist, dass die Anzahl der Wandler gegenüber der vorstehend abgehandelten Vorrichtung bedeutend verringert ist; wesentliches Merkmal ist aber auch, dass diese Vorrichtung ausschließlich geeignet ist zur Aufnahme eines Bildes im Nahfeldbereich jedes verwendeten Wandlers. Dies macht die Vorrichtung grundsätzlich ungeeignet zur Aufnahme eines Bildes mit einer für eine gewöhnliche Anwendung, beispielsweise in der Medizintechnik oder in der zerstörungsfreien Prüfung, wünschenswerten Schärfe. Auch ist die Vorrichtung ungeeignet zum Aufnehmen eines Bildes einer Objektfläche, welche sich im Inneren eines relativ zur Wellenlänge des verwendeten Ultraschalls ausgedehnten Objektes befindet.

Aus der DE 26 55 274 A1 sind ebenfalls ein Verfahren und eine Vorrichtung zum Aufnehmen eines Bildes einer Objektfläche mittels Ultraschall bekannt. Bei dieser Vorrichtung dient eine zweidimensionale Anordnung mit vielen Ultraschall-Wandlern sowohl als Sender als auch als Empfänger. Die einzelnen Ultraschallwandler werden im Sende- und im Empfangsbetrieb jeweils zu mehreren Liniengruppen zusammengefasst. Die Liniengruppen im Sendebetrieb sind orthogonal zu den Liniengruppen im Empfangsbetrieb.Die offenbarte Vorrichtung ist dabei ausschließlich für einen Reflexionsbetrieb bestimmt. Eine Durchstrahlung der abzubildenden Objektfläche (= Transmissionsbetrieb) ist dagegen nicht möglich.

In der US 5,901,708 werden eine Vorrichtung und ein Verfahren zum Aufnehmen des Bildes einer Oberfläche mittels fokussierbarer Ultraschallstrahlung beschrieben. Dabei wird für jedes Objektelement eines Rasters ein mittels eines Senders auf das Objektelement fokussierter Ultraschallstrahl ausgesandt und das reflektierte Signal mittels eines Empfängers aufgenommen. Die für jedes Objektelement gewonnene Bildinformation wird zu einem Gesamtbild der Oberfläche zusammengesetzt.

Die Erfindung geht aus von der Aufgabe, ein Verfahren und eine Vorrichtung der eingangs genannten Art anzugeben, welches bzw. welche bei Vermeidung jedweder übermäßigen Komplexität geeignet ist zur Aufnahme eines Bildes mit einer anwendungsgerechten Präzision und Schärfe. Weiterhin sollen Verfahren und Vorrichtung sowohl für einen Reflexions- als auch für einen Transmissionsbetrieb geeignet sein.

Zur Lösung der Aufgabe angegeben wird ein Verfahren zum Aufnehmen eines Bildes einer Objektfläche mittels einer fokussierbaren Strahlung, welches folgende Schritte umfasst:
a) Definieren eines die Objektfläche überdeckenden Rasters von Objektelementen;
b) für jedes Objektelement:
   b1) Aussenden eines auf eine das Objektelement erfassende zugehörige Senderlinie in der Objektfläche fokussierten ersten Signals der Strahlung mittels eines Senders, wobei der Sender das erste Signal auf jede beliebige Senderlinie fokussieren kann;
   b2) Empfangen eines mittels des ersten Signals erzeugten, auf eine das Objektelement erfassende und die zugehörige Senderlinie kreuzende zugehörige Empfängerlinie in der Objektfläche fokussierten zweiten Signals der Strahlung mittels eines separat zum Sender aufgebauten Empfängers;
   b3) Aufnehmen einer zugehörigen Bildinformation für das Objektelement aus dem zweiten Signal; und
c) Zusammensetzen des Bildes aus den Bildinformationen aller Objektelemente.

Zur Lösung der Aufgabe angegeben wird ebenfalls eine Vorrichtung zum Aufnehmen eines Bildes einer Objektfläche mittels einer fokussierbaren Strahlung, welche folgende Bestandteile umfasst:
a) Mittel zum Definieren eines die Objektfläche überdeckenden Rasters von Objektelementen;
b) einen Sender, welcher eingerichtet ist, um für jedes Objektelement ein auf eine zugehörige, das Objektelement erfassende Senderlinie in der Objektfläche fokussiertes erstes Signal der Strahlung auszusenden, wobei der Sender das erste Signal auf jede beliebige Senderlinie fokussieren kann;
c) einen separat zum Sender aufgebauten Empfänger, welcher eingerichtet ist, um für jedes Objektelement ein mittels des ersten Signals erzeugtes, auf eine zugehörige, das Objektelement erfassende und die zugehörige Senderlinie kreuzende Empfängerlinie in der Objektfläche fokussiertes zweites Signal der Strahlung zu empfangen;
d) eine Koordinationseinrichtung zur Steuerung des Senders und des Empfängers derart, dass für jedes Objektelement ein erstes Signal ausgesendet und ein zweites Signal empfangen sowie eine zugehörige Bildinformation aus jedem zweiten Signal aufgenommen wird; und
e) eine Kompositionseinrichtung zum Zusammensetzen des Bildes aus den Bildinformationen aller Objektelemente.

Die Erfindung erfordert zunächst, in der Objektfläche, deren Bild aufzunehmen ist, ein Raster von Objektelementen zu definieren, welches Raster gegeben ist durch Kreuzungspunkte von Senderlinien und diese kreuzenden Empfängerlinien. Es kommt ein Sender zum Einsatz, welcher eingerichtet ist, um wahlweise ein auf jede beliebige Senderlinie fokussiertes erstes Signal zu erzeugen, und es kommt ein Empfänger zum Einsatz, welcher eingerichtet ist, um wahlweise ein auf jede Empfängerlinie fokussiertes zweites Signal zu empfangen. Sender und Empfänger sind getrennte Einheiten. Die Auswahl eines Bildelementes, zu dem Bildinformation aufgenommen werden soll, erfolgt durch Auswahl der zugehörigen Senderlinie und der zugehörigen Empfängerlinie, Aussenden des entsprechenden ersten und Empfangen des entsprechenden zweiten Signals. Da die Senderlinie und die Empfängerlinie sich nur in dem entsprechenden Objektelement kreuzen, entspricht die aus dem zweiten Signal abgeleitete Bildinformation der gewünschten Bildinformation des Objektelementes.

Durch die Verwendung eines fokussierenden Senders und eines fokussierenden Empfängers ist es möglich, die Objektfläche frei zu bestimmen und außerhalb der Nahfeldbereiche des Senders und des Empfängers zu arbeiten. Damit entfällt jede entsprechende Einschränkung, und es ist damit möglich, ein praktisch beliebig feines Raster für die Objektfläche zu verwenden und somit ein Bild der Objektfläche bis zu einer nur durch die Wellenlänge der verwendeten Strahlung begrenzten Feinheit zu erzeugen. Es entfällt auch jedwede Einschränkung hinsichtlich der Ausdehnung eines Objektes, in welchem die Objektfläche liegt. Damit ist es möglich, ein Schnittbild eines realen Objektes, insbesondere eines lebenden Körpers im Rahmen der Medizintechnik oder eines technischen Gegenstandes im Rahmen der zerstörungsfreien Werkstoffprüfung, herzustellen.

Es versteht sich, dass in jedem Anwendungsfall für eine geeignete Ankopplung des Senders und des Empfängers an ein zu untersuchendes Objekt Sorge getragen werden muss. Durch die bauliche Trennung von Sender und Empfänger erhält man eine sehr flexible Einsatzmöglichkeit. Je nach Positionierung von Sender und Empfänger in Bezug zur Objektfläche ist ein Reflexions- oder auch ein Transmissionsbetrieb möglich.

Eine bevorzugte Ausgestaltung des Verfahrens und der Vorrichtung sieht vor, dass jede Empfängerlinie jede Senderlinie orthogonal kreuzt; derart ergibt sich das Raster als herkömmliches orthogonales Raster.

Eine weitere bevorzugte Ausgestaltung des Verfahrens und der Vorrichtung zeichnet sich dadurch aus, dass die Objektfläche eben ist; dies erfordert u.U. eine besondere Ausgestaltung des verwendeten Senders und des verwendeten Empfängers, wie später anhand eines Ausführungsbeispiels erläutert wird.

Das zweite Signal wird vorzugsweise durch Transmission des ersten Signals durch die Objektfläche oder Reflexion des ersten Signals an der Objektfläche erzeugt. Sowohl Transmission als auch Reflexion kann mit oder ohne Ablenkung des ersten Signals erfolgen. Es sei bemerkt, dass die Wahl der Ablenkung u.U. geeignet ist, spezifische Informationen über die Beschaffenheit der Bildfläche bzw. das die Bildfläche enthaltende Objekt zu erhalten.

Als fokussierbare Strahlung kommt mit besonderem Vorzug Ultraschall in Betracht. Eine Anwendung von Licht, insbesondere Laserlicht, und anderer elektromagnetischer Strahlung ist jedoch keinesfalls ausgeschlossen.

Das in der Vorrichtung vorgesehene Mittel zum Definieren eines die Objektfläche überdeckenden Rasters von Objektelementen kann auf vielfältige Art gebildet sein; besonders bevorzugt wird dieses Mittel in Form eines in der Koordinationseinrichtung installierten Planes. Dieser Plan kann dazu dienen, aus jeweils mehreren Wandlern im Sender und/oder im Empfänger einen Wandler auszuwählen, welcher einer vorgegebenen Senderlinie bzw. einer vorgegebenen Empfängerlinie entspricht; der Plan kann auch dazu dienen, einen einzigen Wandler im Sender und/oder einen einzigen Wandler im Empfänger eine jeweils vorherbestimmte Position einzustellen entsprechend der ausgewählten Senderlinie bzw. der ausgewählten Empfängerlinie. Die Einstellung kann eine mechanische Verschiebung oder eine durch entsprechende rein elektronische Steuerung bewirkte Richtung sein. Schließlich ist es denkbar, das Mittel als Kombination eines in der Koordinationseinrichtung installierten Plans mit einer mechanischen Einrichtung, beispielsweise einer Anordnung mechanischer Rasten im Sender oder im Empfänger, vorzusehen.

Der Sender oder der Empfänger der Vorrichtung umfasst in einer ersten bevorzugten Ausgestaltung für jede Senderlinie bzw. jede Empfängerlinie einen zugehörigen Wandler sowie einen zugehörigen Fokussierer. Der Wandler kann punktartig und der Fokussierer astigmatisch ausgebildet sein, um die gewünschte lineare Fokussierung auf eine Senderlinie bzw. eine Empfängerlinie zu erreichen. Alternativ vorzugsweise ist jeder zugehörige Wandler linienartig und jeder zugehörige Fokussierer zylindrisch ausgebildet.

Ein Fokussierer ist insbesondere eine Linse, und zwar je nach Anwendungsfall eine zylindrische oder astigmatische Linse, oder ein Spiegel, und zwar je nach Anwendungsfall ein zylindrischer, einfach gekrümmter oder astigmatischer, zweifach, insbesondere elliptische gekrümmter Spiegel.

Eine weitere alternativ bevorzugte Ausgestaltung der Vorrichtung zeichnet sich dadurch aus, dass der Sender oder der Empfänger ein "Phased Array" von Wandlern ist. Ein solcher Sender zeichnet sich dadurch aus, dass das von ihm ausgesendete erste Signal mit elektronischen Mitteln wahlweise auf jede Senderlinie fokussiert werden kann, ohne dass ein mechanischer Eingriff notwendig ist; analoges gilt für einen entsprechenden Empfänger.

Ausführungsbeispiele der Erfindung werden nachfolgend anhand der Zeichnung erläutert. Im einzelnen zeigen:
Figur 1 eine schematische Skizze einer Vorrichtung zum Aufnehmen eines Bildes einer Objektfläche mittels einer fokussierbaren Strahlung;
Figuren 2 bis 8 jeweils eine Anordnung aus Sender, Objektflache, Empfänger und Fokussierungsmitteln.

In allen Figuren der Zeichnung tragen einander entsprechende Teile jeweils dasselbe Bezugszeichen.

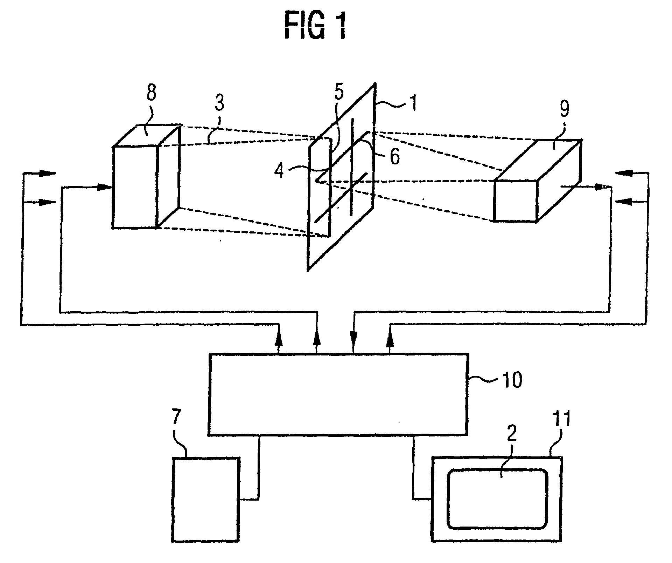

Figur 1 zeigt eine Vorrichtung zur Abbildung einer Objektfläche 1 in einem Bild 2 mittels einer fokussierbaren Strahlung 3. Dabei ist diese Strahlung 3 Ultraschall und durchsetzt die Objektfläche 1 etwa orthogonal. In der Objektfläche 1 ist ein Raster aus Objektelementen 4 definiert, wobei jedes Objektelement ein Kreuzungspunkt einer Senderlinie 5 und einer Empfängerlinie 6 ist. Das Raster ist definiert durch ein entsprechendes Mittel 7, hier einen Datenspeicher 7, aus welchem Information zur zielgerichteten Steuerung eines zum Aussenden der Strahlung 3 vorgesehenen Senders 8 und eines zum Empfang der Strahlung 3 vorgesehenen Empfängers 9 abrufbar ist. Der Sender 8 und der Empfänger 9 sind separate Einheiten. Der Sender 8 ist eingerichtet, um für jedes Objektelement 4 ein auf die Zugehörige, das Objektelement 4 erfassende Senderlinie 5 fokussiertes erstes Signal der Strahlung 3 auszusenden. Der Empfänger 9 ist derart eingerichtet, dass er für jedes Objektelement 4 ein mittels des ersten Signals erzeugtes, auf eine dem Objektelement 4 zugehörige, die zugehörige Senderlinie 5 kreuzende Empfängerlinie 6 fokussiertes zweites Signal der Strahlung 3 zu empfangen. Dieses zweite Signal entspricht demjenigen Teil der von dem Sender 8 ausgesandten Strahlung 3, welcher die Objektfläche 1 im Bereich des Objektelementes 4 durchdrungen hat und somit eine diesem Objektelement 4 zugehörige Bildinformation trägt. Diese Bildinformation ist insbesondere eine Phasenlage oder eine Intensität des zweiten Signals relativ zu dem ersten Signal. Um das vollständige Bild 2 aufzunehmen, muss für jedes Objektelement 4 der Objektfläche 1 die zugehörige Bildinformation wie beschrieben ermittelt, und dann müssen die Bildinformationen aller Objektelemente 4 zu dem gewünschten Bild 2 zusammengesetzt werden. Zu diesem Zweck ist eine Koordinationseinrichtung 10 vorgesehen; diese steuert den Sender 8 und den Empfänger 9, insbesondere dadurch, dass sie deren Fokussierung jeweils auf eine ausgewählte Senderlinie 5 bzw. Empfängerlinie 6 bewirkt, dem Sender 8 die zur Aussendung des Signals benötigte Energie zuführt und von dem Empfänger 9 die dem von diesem empfangenen zweiten Signal entsprechende Information zugeführt erhält. Die Koordinationseinrichtung 10 wirkt dazu zusammen mit dem Datenspeicher 7, welcher die zur Fokussierung des Senders 8 und des Empfängers 9 notwendige Information enthält. Der Datenspeicher 7 kann ein Massenspeicher oder Programmteil in einer als herkömmlicher Computer mit darauf ablaufendem entsprechendem Programm ausgestalteten Koordinationseinrichtung 10 sein. Außerdem kann der Datenspeicher 10 zusammenwirken mit mechanischen Mitteln im Sender 8 und/oder im Empfänger 9, beispielsweise mechanischen Rasten. Mit der Koordinationseinrichtung 10 verbunden und von dieser gesteuert ist auch eine Kompositonseinrichtung 11, hier dargestellt als ein einfacher Bildschirm, worin das Bild 2 aus den Bildinformationen aller Objektelemente 4 zusammengesetzt wird.

Die nachfolgenden Figuren illustrieren verschiedene Ausführungsbeispiele für die Anordnung aus Sender 8, Objektfläche 1 und Empfänger 9.

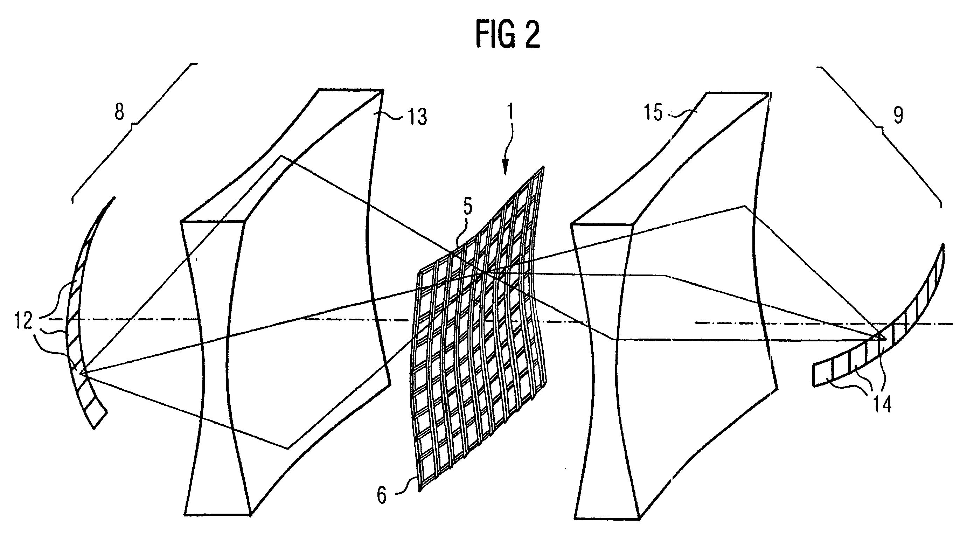

Figur 2 zeigt eine Anordnung von Sender 8, Objektfläche 1 und Empfänger 9. Der Sender 8 umfasst eine Vielzahl punktartiger Wandler 12, welche entlang einer gebogenen Linie angeordnet sind, und einen Fokussierer 13 in Form einer astigmatischen Linse. Ebenso umfasst der Empfänger 9 eine Vielzahl punktartiger, entlang einer gebogenen Linie angeordneter Wandler 14 und einen Fokussierer 15, ebenfalls eine astigmatische Linse. Es versteht sich, dass die Auslegung der dargestellten Anordnung unter Beachtung der Grundsätze der Wellenmechanik erfolgen muss, was an dieser Stelle keiner weiteren Ausführung bedarf. Darauf hinzuweisen ist, dass die Objektfläche 1 bei der Ausführungsform gemäß Figur 2 eine gekrümmte Sattelfläche ist, welche alle Senderlinien 5 und alle die Senderlinien 5 kreuzenden Empfängerlinien 6 enthält. Somit liefert die Anordnung ein scharfes Bild, allerdings ein scharfes Bild der gekrümmten Objektfläche 1.

Es versteht sich, dass an die Stelle jedes in Figur 2 gezeigten einfachen Fokussierers 13 oder 15 ein verstellbarer, aufwendiger konstruierter Fokussierer 13 oder 15 treten kann, um die Lage der abzubildenden Objektfläche 1 verschieben und somit eine Bildfolge eines dreidimensionalen Volumens aufnehmen zu können.

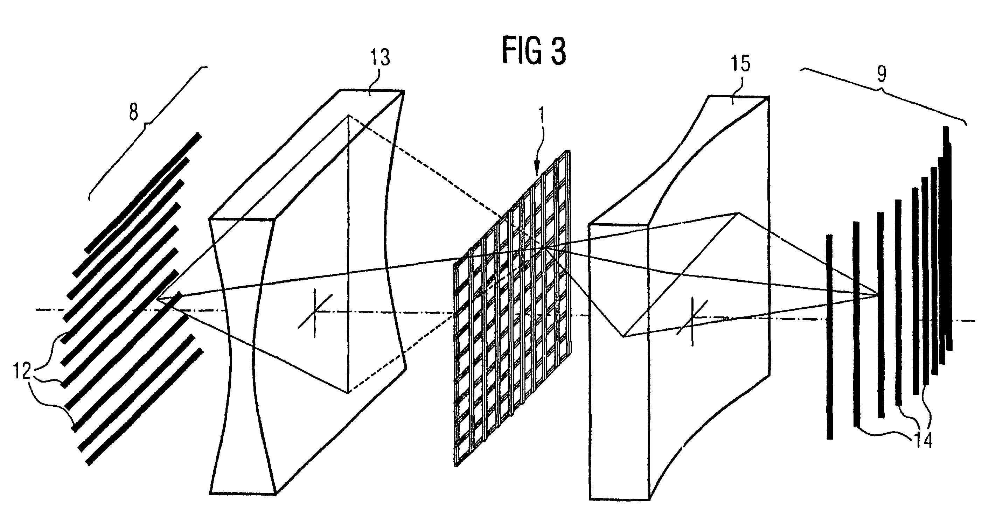

Figur 3 zeigt eine Anordnung mit Sender 8, Objektfläche 1 und Empfänger 9, wobei der Empfänger 9 eine Vielzahl linienartiger Wandler 12, welche in einer einfach gebogenen Fläche nebeneinander angeordnet sind, und einen Fokussierer 13 in Form einer Zylinderlinse aufweist. Der Empfänger 9 ist analog aufgebaut mit einer Vielzahl von Wandlern 14, ebenfalls angeordnet in einer einfach gebogenen Fläche, und einer Zylinderlinse 15 als Fokussierer 15. In dieser Anordnung ist die Objektfläche 1 eben. Auch diese Anordnung erfordert für ihre konkrete Auslegung die Beachtung der einschlägigen Grundsätze der Wellenmechanik.

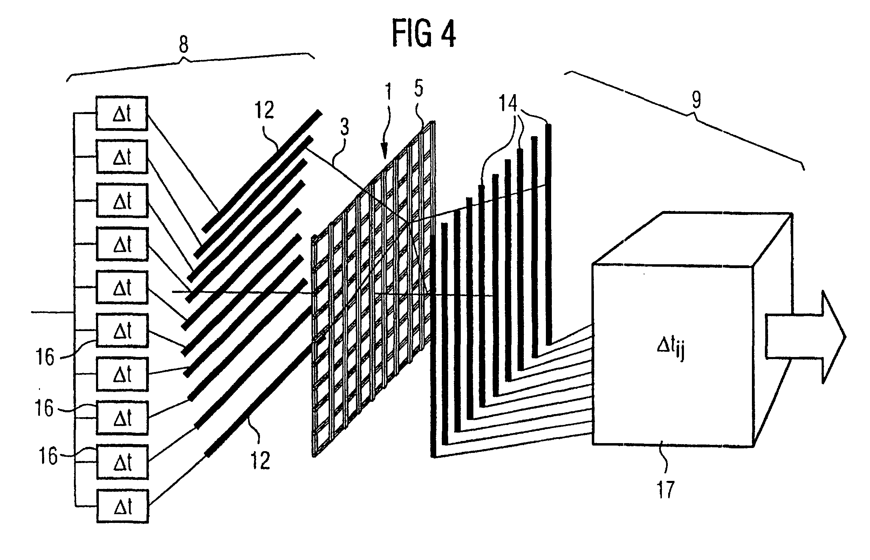

Figur 4 zeigt eine Anordnung mit Sender 8, Objektfläche 1 un Empfänger 9, wobei unter Gewährleistung einer ebenen Objektfläche 1 der Sender 8 viele in einer einfach gebogenen Fläche angeordnete Wandler 12 aufweist, welche über eine Anordnung mit vielen jeweils einem Wandler 12 zugeordneten Phasenschiebern 16 mit Energie gespeist werden. Durch entsprechende Einstellung der Phasenschieber 16 kann die von dem Sender 8 ausgehende Strahlung wahlweise auf jede Senderlinie 5 eingestellt werden. Ein solcher Sender 8 ist unter der Bezeichnung "Phased Array" grundsätzlich bekannt. Ein solcher Sender ermöglicht es, die von ihm ausgehende Strahlung 3 nach Vorgabe zu richten und zu fokussieren, wobei dies in gewissen Grenzen allein durch geeignete Einstellung der Phasenschieber 16 erfolgen kann. Gegebenenfalls ist es auch möglich, zusätzlich zur Einstellung der Phasenschieber 16 die Wandler 12 mechanisch zu verschieben. Auch der Empfänger 9 ist als "Phased Array" gestaltet, wobei die vielen linienartigen Wandler 14 in einer ebenen Fläche angeordnet sind. Der Empfänger 9 ist mittels einer Ansteuerung der Wandler 14 über ein Phasenschiebernetzwerk 17 richtbar und fokussierbar. Um die beim Empfänger 9 verfügbare Energie des empfangenen zweiten Signals umfassend auszunutzen, ist es sinnvoll, Bildinformationen mehrerer Objektelemente 4 auf verschiedenen Empfängerlinien 6 nicht zeitlich hintereinander, sondern gleichzeitig oder parallel auszuwerten. Dazu wären in dem Phasenschiebernetzwerk 17 entsprechende, zueinander parallele Teilnetzwerke, jedes zur Fokussierung auf eine zugehörige Empfängerlinie 6, vorzusehen. So lässt sich ein vollständiges Bild 2 mit gutem Signal-Rausch-Verhältnis in relativ kurzer Zeit, kurz genug zur Aufnahme einer Bewegung in einer Sequenz von mehreren Bildern 2, aufnehmen.

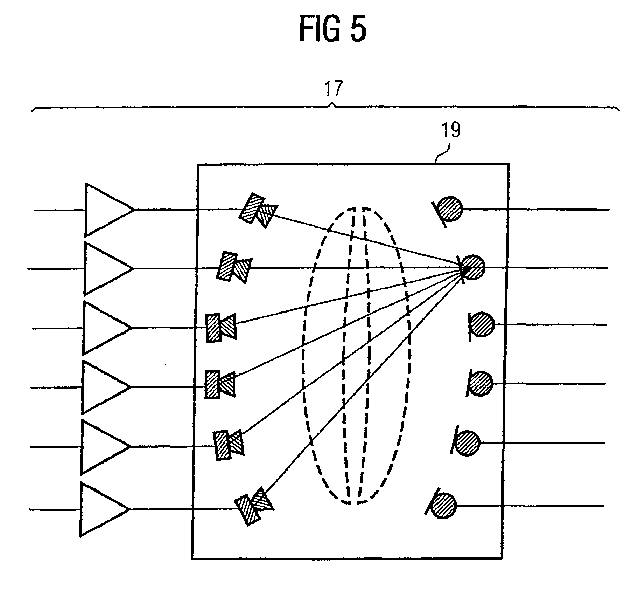

Wie in Figur 5 angedeutet, muss das Phasenschiebernetzwerk 17 nicht notwendigerweise voll elektronisch ausgeführt werden, sondern es kann in diesem Phasenschiebernetzwerk 17 unter Umständen ein elektroakustischer Wandler 19, welcher insbesondere mit Oberflächenwellen arbeitet, eingesetzt werden. Ein solcher Wandler 19 ersetzt unter Umständen mit großem konstruktivem Vorteil ein aufwendiges elektronisches Netzwerk.

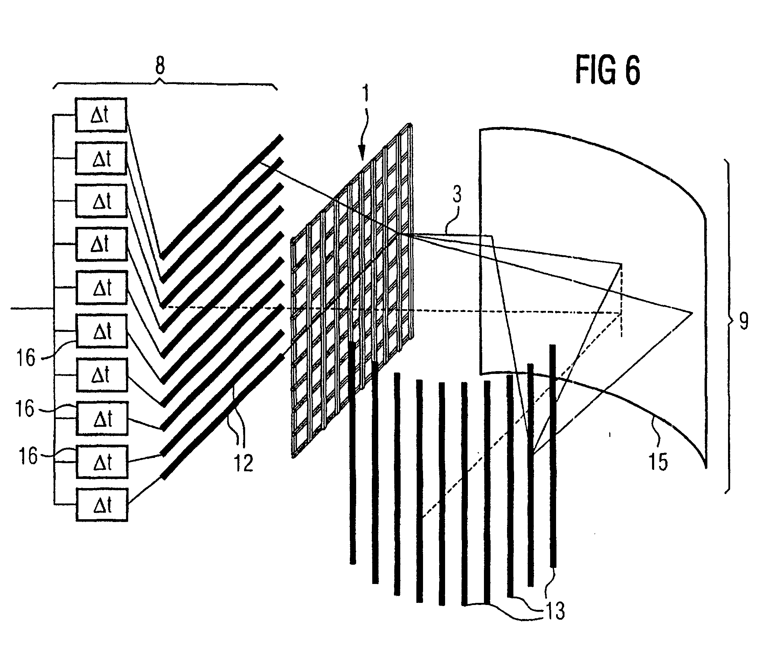

Die Ausführungsform gemäß Figur 6 zeigt, wie anstatt einer Fokussierung mit Hilfe einer Linse 13 oder 15 eine Fokussierung mittels eines Spiegels 15 erfolgen kann. Der Spiegel 15 ist je nach Anforderung und Gestaltung der zugehörigen Wandler 14 einfach oder mehrfach gekrümmt. Der Spiegel 15 hat den Vorteil, dass sowohl chromatische Aberration als auch Transmissionsdämpfung, welche beide stets bei einer Linse 13 oder 15 erwartet werden müssen, nicht vorhanden sind. Auch wird der Spiegel 15 vorteilhaft eingesetzt zur Faltung des Weges der Strahlung 3, was der Kompaktheit der Vorrichtung zugute kommt. Gemäß Figur 6 ist der Empfänger 9 ausgeführt mit linienartigen Wandlern 14 und einem elliptisch gekrümmten Spiegel 15, der Sender 8 als "Phased Array" entsprechend der Ausführung gemäß Figur 4. Es versteht sich, dass die Ausbildung des Empfängers 9 gemäß Figur 6 auch zur Ausbildung eines Senders 8 in Frage kommt. Die Ausführung gemäß Figur 6 wird derzeit für eine Realisierung in Betracht gezogen. Dabei sollen Wandler 12 und 14 zum Einsatz kommen, die für Ultraschall bei einer Frequenz zwischen 1 MHz und 5 MHz ausgelegt sind; die Objektfläche 1 soll quadratisch mit einer Seitenlänge von etwa 10 cm sein.

Die in den Figuren 2 bis 4 und 6 dargestellten Ausführungsformen sind jeweils derart eingerichtet, dass die zum Aufnehmen des gewünschten Bildes benutzte Strahlung 3 durch die Objektfläche 1 transmittiert wird. Dazu gibt es jedoch Alternativen, welche je nach Anwendungsfall bessere oder zusätzliche Bildinformation im Vergleich zum vorstehend angedeuteten Verfahren unter Transmission der Strahlung durch die Objektfläche 1 liefern können.

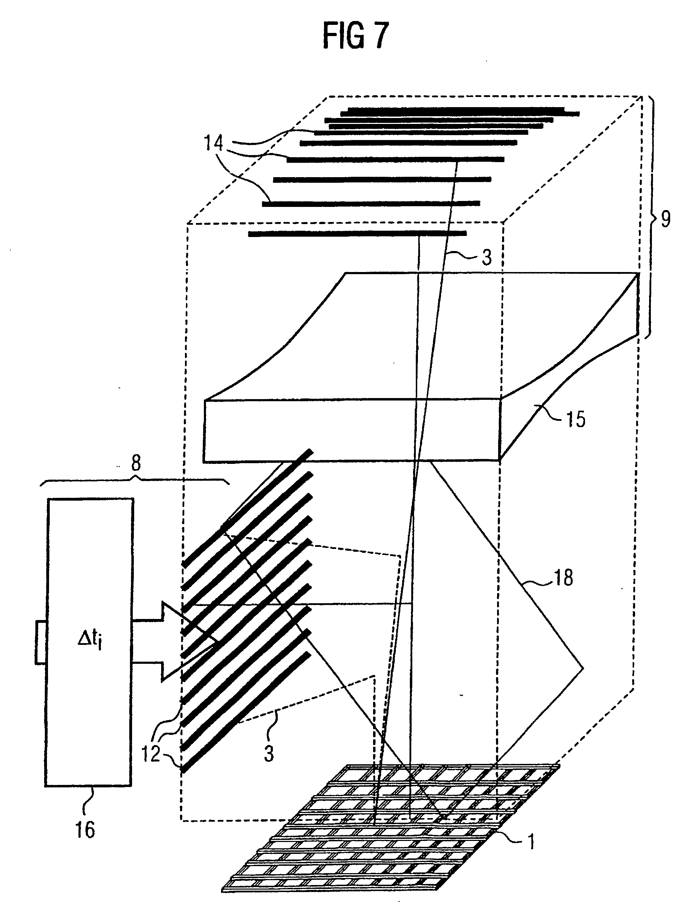

Figur 7 zeigt eine Ausführungsform, bei welcher Strahlung 3 ausgewertet wird, welche von der Objektfläche 1 senkrecht reflektiert wurde. Der Sender 8 ist ein ebenes "Phased Array" mit vielen Wandlern 12 und einem Phasenschiebernetzwerk 16, analog zu dem Empfänger 9 aus Figur 4. Der Sender 8 sendet die Strahlung 3, namentlich Ultraschall, zunächst parallel zur Objektfläche 1 aus, bis diese auf einen schräg zur Objektfläche 1 ausgerichteten halbdurchlässigen Spiegel 18 trifft, welcher die von dem Sender 8 ausgehende Strahlung 3 senkrecht auf die Objektfläche 1 richtet. Dort wird die Strahlung senkrecht reflektiert und gelangt durch den halbdurchlässigen Spiegel 18 zum Empfänger 9, umfassend eine Anordnung von Wandlern 14 und eine Zylinderlinse 15 entsprechend der Ausführungsform aus Figur 3. Die Ausführungsform gemäß Figur 5 ist zum Aufnehmen eines Bildes mittels Reflexion der Strahlung 3 an der Objektfläche 1 sehr kompakt ausführbar.

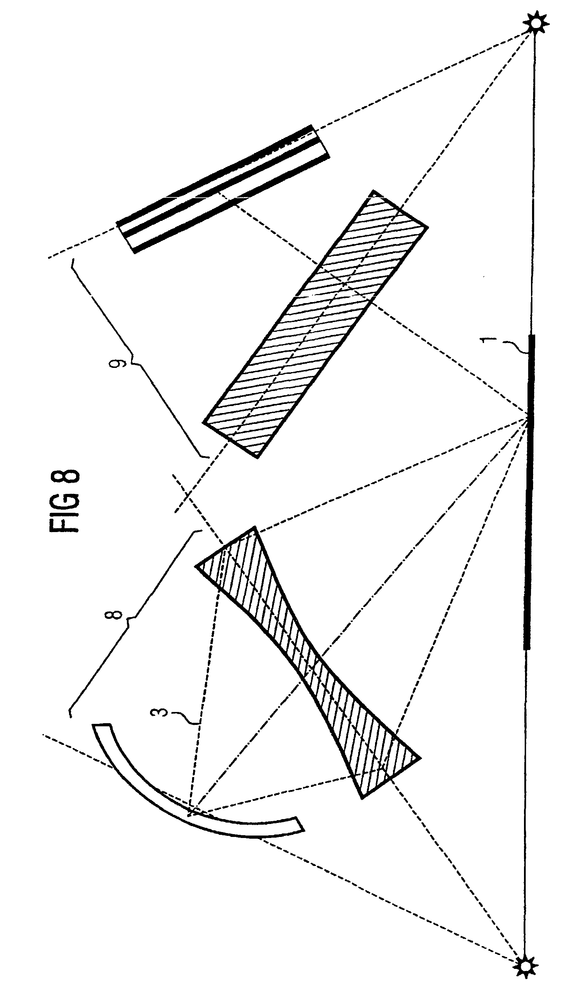

Figur 8 zeigt eine Ausführungsform mit einem Sender 8 und einem Empfänger 9, welche beide grundsätzlich entsprechend der Ausführung gemäß Figur 3 ausgeführt sind. Der Sender 8 und der Empfänger 9 sind jedoch beide gemäß dem "Scheimpflug-Prinzip" der Wellenmechanik relativ zu der Objektfläche 1 geneigt. Eine Strahlung 3, welche vom Sender 8 zum Empfänger 9 gelangt, wird dementsprechend schräg an der Objektfläche 1 reflektiert. Hieraus ist erkennbar, dass die Erfindung grundsätzlich keinerlei Vorbedingung hinsichtlich der Art und Weise, wie die vom Sender 8 zur Objektfläche 1 gesendete Strahlung 3 schließlich zum Empfänger 9 gelangt, stellt. Damit ist es grundsätzlich möglich, die vom Ablenkwinkel der ein- und ausfallenden Strahlung 3 abhängigen Streueigenschaften des Materials, welches die Objektfläche 1 bildet, umfassend zur Gewinnung eines aussagekräftigen Bildes 2 der Objektfläche 1 nutzbar zu machen.

## Patentansprüche

1. Verfahren zum Aufnehmen eines Bildes (2) einer Objektfläche (1) mittels einer fokussierbaren Strahlung (3), umfassend folgende Schritte:
a) Definieren eines die Objektfläche (1) überdeckenden Rasters von Objektelementen (4);
b) für jedes Objektelement (4):
b1) Aussenden eines auf eine das Objektelement (4) erfassende zugehörige Senderlinie (5) in der Objektfläche (1) fokussierten ersten Signals der Strahlung (3) mittels eines Senders (8), wobei der Sender (8) das erste Signal auf jede beliebige Senderlinie fokussierem kann;
b2) Empfangen eines mittels des ersten Signals erzeugten, auf eine das Objektelement (4) erfassende und die zugehörige Senderlinie (5) kreuzende zugehörige Empfängerlinie (6) in der Objektfläche (1) fokussierten zweiten Signals der Strahlung (3) mittels eines separat zum Sender (8) aufgebauten Empfängers (9);
b3) Aufnehmen einer zugehörigen Bildinformation für das Objektelement (4) aus dem zweiten Signal; und
c) Zusammensetzen des Bildes (2) aus den Bildinformationen aller Objektelemente (4).

2. Verfahren nach Anspruch 1, bei dem jede Empfängerlinie (6) jede Senderlinie (5) orthogonal kreuzt.

3. Verfahren nach einem der vorigen Ansprüche, bei dem die Objektfläche (1) eben ist.

4. Verfahren nach einem der vorigen Ansprüche, bei dem das zweite Signal mittels Transmission des ersten Signals durch die Objektfläche (1) erzeugt wird.

5. Verfahren nach einem der Ansprüche 1 bis 3, bei dem das zweite Signal mittels Reflexion des ersten Signals an der Objektfläche (1) erzeugt wird.

6. Verfahren nach einem der vorigen Ansprüche, bei dem als die Strahlung (3) Ultraschall (3) verwendet wird.

7. Vorrichtung zum Aufnehmen eines Bildes (2) einer Objektfläche (1) mittels einer fokussierbaren Strahlung (3), umfassend:
a) Mittel (7) zum Definieren eines die Objektfläche (1) überdeckenden Rasters von Objektelementen (4);
b) einen Sender (8), welcher eingerichtet ist, um für jedes Objektelement (4) ein auf eine zugehörige, das Objektelement (4) erfassende Senderlinie (5) in der Objsktflächs (1) fokussiertes erstes Signal der Strahlung (3) auszusenden, wobei der Sender (8) das erste Signal auf jede beliebige Senderlinie (5) fokussieren kann;
c) einen separat zum Sender (8) aufgebauten Empfänger (9), welcher eingerichtet ist, um für jedes Objektelement (4) ein mittels des ersten Signals erzeugtes, auf eine zugehörige, das Objektelement (4) erfassende und die zugehörige Senderlinie (5) kreuzende Empfängerlinie (6) in der Objektfläche (1) fokussiertes zweites Signal der Strahlung (3) zu empfangen;
d) eine Koordinationseinrichtung (10) zur Steuerung des Senders (8) und des Empfängers (9) derart, dass für jedes Objektelement (4) ein erstes Signal ausgesendet und ein zweites Signal empfangen sowie eine zugehörige Bildinformation aus jedem zweiten Signal aufgenommen wird; und
e) eine Kompositionseinrichtung (11) zum Zusammensetzen des Bildes (2) aus den Bildinformationen aller Objektelemente(4).

8. Vorrichtung nach Anspruch 7, deren Mittel (7) zur Definition des Rasters ein in der Koordinationseinrichtung (10) installierter Plan (7) ist.

9. Vorrichtung nach einem der Ansprüche 7 und 8, bei der der Sender (8) oder der Empfänger (9) für jede Senderlinie (5) bzw. Empfängerlinie (6) einen zugehörigen Wandler (12,14) sowie einen zugehörigen Fokussierer (13,15) aufweist.

10. Vorrichtung nach Anspruch 9, bei der jeder zugehörige Wandler (12,14) punktartig und jeder zugehörige Fokussierer (13,15) astigmatisch (13,15) ist.

11. Vorrichtung nach Anspruch 9, bei der jeder zugehörige Wandler (12,14) linienartig und jeder zugehörige Fokussierer (13,15) zylindrisch ist.

12. Vorrichtung nach einem der Ansprüche 9 bis 11, bei der ein Fokussierer (13,15) eine Linse (13,15) ist.

13. Vorrichtung nach einem der Ansprüche 9 bis 12, bei der ein Fokussierer (13,15) ein Spiegel (13,15) ist.

14. Vorrichtung nach einem der Ansprüche 7 und 8, bei der der Sender (B) oder der Empfänger (9) ein "Phased Array" von Wandlern (12, 14) ist.

15. Vorrichtung nach einem der Ansprüche 7 bis 14, bei der der Sender (8) eine ebene Sendelinie (5) und der Empfänger (9) eine ebene Empfängerlinie (6) hat.

16. Vorrichtung nach einem der Ansprüche 7 bis 15, bei der der Empfänger (9) eingerichtet ist zum Empfangen von Strahlung (3), welche von der Objektfläche (1) transmittiert ist.

17. Vorrichtung nach einem der Ansprüche 7 bis 15, bei der der Empfänger (9) eingerichtet ist zum Empfangen von Strahlung (3), welche von der Objektfläche (1) reflektiert ist.

18. Vorrichtung nach einem der Ansprüche 7 bis 17, welche eingerichtet ist für Ultraschall als Strahlung (3).

## Claims

1. Method for taking an image (2) of an object surface (1) by means of a focusable radiation (3), comprising the following steps:
a) defining an array, covering the object surface (1), of object elements (4);
b) for each object element (4):
b1) using a transmitter (8) to emit a first signal of the radiation (3) that is focused onto an associated transmitter line (5), including the object element (4), in the object surface (1), the transmitter (8) being able to focus the first signal onto any desired transmitter line;
b2) using a receiver (9), constructed separately from the transmitter (8), to receive a second signal of the radiation (3) that is generated by means of the first signal and is focused onto an associated receiver line (6), including the object element (4) and crossing the associated transmitter line (5), in the object surface (1);
b3) picking up an associated image information item for the object element (4) from the second signal; and
c) composing the image (2) from the image information items of all the object elements (4).

2. Method according to Claim 1, in which each receiver line (6) crosses each transmitter line (5) orthogonally.

3. Method according to one of the preceding claims, in which the object surface (1) is flat.

4. Method according to one of the preceding claims, in which the second signal is generated by means of transmitting the first signal through the object surface (1).

5. Method according to one of Claims 1 to 3, in which the second signal is generated by means of reflecting the first signal at the object surface (1).

6. Method according to one of the preceding claims, in which ultrasound (3) is used as the radiation (3).

7. Device for taking an image (2) of an object surface (1) by means of a focusable radiation (3), comprising:
a) means (7) for defining an array of object elements (4) that covers the object surface (1);
b) a transmitter (8), which is set up in order to emit for each object element (4) a first signal of the radiation (3) that is focused onto an associated transmitter line (5), including the object element (4), in the object surface (1), the transmitter (8) being able to focus the first signal onto any desired transmitter line (5);
c) a receiver (9), constructed separately from the transmitter (8), which is set up in order to receive for each object element (4) a second signal of the radiation (3) that is generated by means of the first signal and is focused onto an associated receiver line (6), including the object element (4) and crossing the associated transmitter line (5), in the object surface (1);
d) a co-ordination device (10) for controlling the transmitter (8) and the receiver (9) in such a way that for each object element (4) a first signal is emitted and a second signal is received, and an associated image information item is picked up from each second signal; and
e) a composing device (11) for composing the image (2) from the image information items of all the object elements (4).

8. Device according to Claim 7, whose defining means (7) is a map (7) installed in the co-ordination device (10).

9. Device according to one of Claims 7 and 8, in which for each transmitter line (5) or receiver line (6), respectively, the transmitter (8) or the receiver (9) has an associated transducer (12, 14) and an associated focuser (13, 15).

10. Device according to Claim 9, in which each associated transducer (12, 14) is punctiform, and each associated focuser (13, 15) is astigmatic.

11. Device according to Claim 9, in which each associated transducer (12, 14) is linear, and each associated focuser (13, 15) is cylindrical.

12. Device according to one of Claims 9 to 11, in which a focuser (13, 15) is a lens (13, 15).

13. Device according to one of Claims 9 to 12, in which a focuser (13, 15) is a mirror (13,15).

14. Device according to one of Claims 7 and 8, in which the transmitter (8) or the receiver (9) is a phased array of transducers (12, 14).

15. Device according to one of Claims 7 to 14, in which the transmitter (8) has a flat transmitter line (5) and the receiver (9) has a flat receiver line (6).

16. Device according to one of Claims 7 to 15, in which the receiver (9) is set up in order to receive radiation (3) which is transmitted by the object surface (1).

17. Device according to one of Claims 7 to 15, in which the receiver (9) is set up in order to receive radiation (3) which is reflected from the object surface (1).

18. Device according to one of Claims 7 to 17, which is set up for ultrasound as radiation (3).

## Revendications

1. Procédé pour enregistrer une image (2) d'une surface objet (1) à l'aide d'un rayonnement focalisable (3), comprenant les étapes suivantes :
a) définition d'une trame, recouvrant la surface objet (1), d'éléments objets (4) ;
b) pour chaque élément objet (4):
b1) émission, à l'aide d'un émetteur (8), d'un premier signal du rayonnement (3), d'une ligne d'émission correspondante (5), qui comprend l'élément objet (4), et se trouvant dans la surface objet (1), l'émetteur (8) pouvant focaliser le premier signal sur toute ligne d'émission voulue ;
b2) réception, à l'aide d'un récepteur (9), construit séparément de l'émetteur (8), d'un deuxième signal du rayonnement (3), focalisé sur une ligne de réception (6) correspondante, qui comprend l'élément objet (4) et qui croise la ligne d'émission correspondante (5), se trouvant dans la surface objet (1) ;
b3) enregistrement d'une information image correspondante pour l'élément objet (4) à partir du deuxième signal ; et
c) assemblage de l'image (2) à partir des informations image de tous les éléments objets (4).

2. Procédé selon la revendication 1, dans lequel chaque ligne de réception (6) croise orthogonalement chaque ligne d'émission (5).

3. Procédé selon l'une des revendications précédentes, dans lequel la surface objet (1) est plane.

4. Procédé selon l'une des revendications précédentes, dans lequel le deuxième signal est produit par transmission du premier signal à travers la surface objet (1).

5. Procédé selon l'une des revendications 1 à 3, dans lequel le deuxième signal est produit par réflexion du premier signal sur la surface objet (1).

6. Procédé selon l'une des revendications précédentes, dans lequel on utilise en tant que rayonnement (3) des ultrasons (3).

7. Appareillage pour enregistrer une image (2) d'une surface objet à l'aide d'un rayonnement focalisable (3), comprenant :
a) un moyen (7) pour définir une trame, recouvrant la surface objet (1), d'éléments objets (4) ;
b) un émetteur (8), monté de façon à émettre, pour chaque élément objet (4), un premier signal du rayonnement (3), focalisé sur une ligne d'émission (5) correspondante, comprenant l'élément objet (4) et se trouvant dans la surface objet (1), l'émetteur (8) pouvant focaliser le premier signal sur n'importa quel ligne d'émission (5) ;
c) un récepteur (9), installé séparément de l'émetteur (8), qui est monté de façon à pouvoir, pour chaque élément objet (4), recevoir un deuxième signal du rayonnement, produit à l'aide du premier signal, focalisé sur une ligne de réception (6) correspondante, qui comprend l'élément objet (4) et qui croise la ligne d'émission correspondante (5), et se trouvant dans la surface objet (1);
d) un dispositif de coordination (10), pour commander l'émetteur (8) et le récepteur (9) de façon que, pour chaque élément objet (4), un premier signal soit émis et un deuxième signal soit reçu, et aussi qu'une information image correspondante provenant de chaque deuxième signal soit enregistrée ; et
e) un dispositif de composition (11), pour assembler l'image (2) à partir des informations images de tous les éléments objets (4).

8. Appareillage selon la revendication 7, dont le moyen (7) destiné à définir la trame est un plan (7) installé dans le dispositif de coordination (10).

9. Appareillage selon l'une des revendications 7 et 8, dans lequel l'émetteur (8) ou le récepteur (9) comporte, pour chaque ligne d'émission (5) ou chaque ligne de réception (6), un convertisseur correspondant (12, 14), ainsi qu'un focalisateur correspondent (13, 15).

10. Appareillage selon la revendication 9, dans lequel chaque convertisseur correspondant (12,14) est ponctuel, et chaque focalisateur correspondant (13,15) est astigmatique (13,15).

11. Appareillage selon la revendication 9, dans lequel chaque convertisseur correspondant (12, 14) est linéaire, et chaque focalisateur correspondant (13,15) est cylindrique.

12. Appareillage selon l'une des revendications 9 à 11, dans lequel un focalisateur (13, 15) est une lentille (13, 15).

13. Appareillage selon l'une des revendications 9 à 12, dans lequel un focalisateur (13, 15) est un miroir (13, 15).

14. Appareillage selon l'une des revendications 7 et 8, dans lequel l'émetteur (8) ou le récepteur (9) est un arrangement en phase (Phased Array) de convertisseurs (12, 14).

15. Appareillage selon l'une des revendications 7 à 14, dans lequel l'émetteur (8) est une ligne d'émission plane (5), et le récepteur (9) est une ligne de réception plane (6).

16. Appareillage selon l'une des revendications 7 à 15, dans lequel le récepteur est monté de façon à recevoir le rayonnement (3) qui est transmis par la surface objet (1).

17. Appareillage selon l'une des revendications 7 à 15, dans lequel le récepteur (9) est monté de façon à recevoir le rayonnement (3) qui est réfléchi par la surface objet (1).

18. Appareillage selon l'une des revendications 7 à 17, qui est monté pour utiliser des ultrasons en tant que rayonnement (3).
